Europäisches Patentamt

European Patent Office

Office européen des brevets

(19)

(11) Veröffentlichungsnummer : **0 238 985 B1**

(12) # EUROPÄISCHE PATENTSCHRIFT

(45) Veröffentlichungstag der Patentschrift :
**26.07.95 Patentblatt 95/30**

(51) Int. Cl.$^6$ : **G11B 5/704, G11B 5/84**

(21) Anmeldenummer : **87103911.1**

(22) Anmeldetag : **17.03.87**

(54) Mehrschichtige Polyesterfolie für magnetische Informationsträger.

(30) Priorität : **26.03.86 DE 3610167**

(43) Veröffentlichungstag der Anmeldung :
**30.09.87 Patentblatt 87/40**

(45) Bekanntmachung des Hinweises auf die
Patenterteilung :
**26.07.95 Patentblatt 95/30**

(84) Benannte Vertragsstaaten :
**DE FR GB LU NL**

(56) Entgegenhaltungen :
**EP-A- 0 164 518**
**EP-A- 0 199 244**
**PATENTS ABSTRACTS OF JAPAN, unexami-**
**ned applications, P Section, Band 9, Nr. 329,**
**24.12.85, THE PATENT OFFICE JAPANESE**
**GOVERNMENT Seite 101 P 416**

(73) Patentinhaber : **HOECHST**
**AKTIENGESELLSCHAFT**
**D-65926 Frankfurt (DE)**

(72) Erfinder : **Dallmann, Hermann, Dr.**
**Erbsensacker 29**
**D-6200 Wiesbaden (DE)**
Erfinder : **Hensel, Hartmut, Dr.**
**Am Rotenberg 2**
**D-6229 Schlangenbad 3 (DE)**
Erfinder : **Schäfer, Werner, Dr.**
**Rosenstrasse 10**
**D-6238 Hofheim-Diedenbergen (DE)**

## Beschreibung

Die vorliegende Erfindung bezieht sich auf eine coextrudierte, biaxial streckorientierte, mehrschichtige Polyesterfolie als Trägerfolie für magnetische Informationsträger.

Biaxial oder multiaxial orientierte Folien aus Polyester, insbesondere Polyethylenterephthalat, finden wegen ihrer überlegenen Eigenschaften, wie ihrer Zugfestigkeit, ihrer Reißfestigkeit, ihres Elastizitätsmoduls, ihrer Transparenz, ihrer chemischen und thermischen Beständigkeit und dergleichen, Anwendung in großem Umfang auf vielen technischen Gebieten wie z.B. dem reprografischen Sektor, als Dielektrikum für Kondensatoren, als Trägerfolien für magnetische Aufzeichnungsmedien wie z.B. für Audio-, Video- und Computerbänder, für Magnetkarten sowie Floppy Disks.

Die Polyesterfolien müssen für die verschiedenen Einsatzgebiete spezifische Anforderungen erfüllen, die sich mit Hilfe der Rohstoffrezepturen oder mittels bestimmter Verfahrenstechniken während der Folienherstellung einstellen lassen.

Polyesterfolien, die zu Magnetbändern verarbeitet werden, müssen z.B. einen niedrigen Reibungskoeffizienten und eine hohe Abriebfestigkeit aufweisen. Für magnetische Aufzeichnungsmedien mit hoher Informationsdichte und langer Spieldauer werden dünne Trägerfolien hoher Festigkeit mit besonders guter Gleitfähigkeit und Abriebfestigkeit bei Dauerbelastung sowie guter Dimensionsstabilität gefordert. Die für die Aufnahme der Informationsträgerschicht vorgesehene Oberfläche muß außerdem extrem glatt sein, um Störeffekte auszuschließen.

Um die Oberflächenrauhigkeit auf der Oberfläche der Folie, die für die Aufnahme der Magnetschicht vorgesehen ist, zu erniedrigen, sind u.a. durch Coextrusion mehrschichtige Folien hergestellt worden, die aus einer ersten Schicht aus thermoplastischen Polymeren ohne Teilchenzusatz, welche eine glatte Oberfläche aufweist, und einer zweiten dünneren, in der üblichen Weise mit Teilchen versehenen Schicht zusammengesetzt sind.

In der US-PS 3,515,626 werden z.B. durch Coextrusion hergestellte Folien aus Polyesterrohstoffen beschrieben, die mindestens eine pigmentierte Schicht aufweisen. In der DE-OS 24 72 309 werden coextrudierte Folien aus mehreren Schichten beschrieben, die lösliche und unlösliche Präzipitate enthalten, und die DE-AS 22 30 970 befaßt sich mit mehrschichtigen Folien mit einer glatten und einer rauhen Oberfläche, die durch Einarbeitung von zwei ineinander nicht löslichen Polymeren in die Polyesterschicht erzielt wird. Schließlich sind auch in den DE-OSen 34 14 310 und 34 14 347 bereits durch Coextrusion hergestellte, mehrschichtige Trägerfolien für magnetische Informationsträger beschrieben.

In der EP-A-0 164 518 wird eine biaxial orientierte, thermofixierte Mehrschichtfolie beschrieben, die aus Polyestern (A und B) besteht, und die eine im wesentlichen kratzerfreie Oberfläche aufweist. Das kennzeichnende Merkmal dieser Folie ist ihre Hitzefixierung, die im Bereich zwischen dem Schmelzpunkt der Polyester A und dem Schemlzpunkt der Polyester B liegt.

Alle die bisher zur Verfügung stehenden Folien erfüllen aber noch nicht gleichzeitig alle zur Herstellung von magnetischen Aufzeichnungsmedien mit hoher Informationsdichte erforderlichen Eigenschaften bezüglich der Stärke, der Längsfestigkeit sowie der Gleit- und Abriebfestigkeit in Gesamtkombination befriedigend.

Aufgabe der vorliegenden Erfindung war es, eine Trägerfolie für magnetische Informationsträger zu schaffen, die zugleich extrem dünn ist, eine hohe Längsfestigkeit aufweist, ausgedrückt durch den Elastizitätsmodul (E-Modul) in Maschinenrichtung (MD), und die darüber hinaus auch eine sehr gute Gleitfähigkeit und Abriebfestigkeit bei Dauerbelastung aufweist.

Gelöst wird diese Aufgabe durch eine Polyesterfolie der eingangs genannten Gattung, deren kennzeichnende Merkmale darin zu sehen sind, daß die Gesamtdicke der mehrschichtigen Folie höchstens 10 μm beträgt, die Oberflächenrauhigkeit der Trägerfolie auf der für die Aufnahme der Informationsträgerschicht vorgesehenen Seite einen $R_a$-Wert (DIN 4768) von gleich/kleiner als 0,010 μm und die Oberflächenrauhigkeit der Gegenseite, die nicht für die Aufnahme der Informationsträgerschicht vorgesehenen Seite der Trägerfolie, einen $R_a$-Wert von größer als 0,010 μm aufweist und daß die Folie einen E-Modul in MD von grösser/gleich 6500 N/mm² hat.

Als Polyester werden im Rahmen der Erfindung Polyester-Homo- und Copolymere, Gemische verschiedener Polyester sowie Abmischungen oder Blends von Polyestern mit anderen Polymeren und gegebenenfalls Harzen angesehen.

Die Herstellung der Polyester kann sowohl nach dem Umesterungsverfahren z.B. mit Hilfe der katalytischen Wirkung von z.B. Zn-, Mg-, Ca-, Mn-, Li- oder Ge-Salzen und Stabilisatoren wie Phosphorverbindungen als auch nach dem Direktesterverfahren erfolgen.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, Polyethylen-2,6-naphthalindicarboxylat oder Polyethylen-

2

p-hydroxybenzoat u.a.

Die Copolyester können als Bausteine u.a. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelithsäure u.a. enthalten. Die Polyestergemische können aus Polyester-Homopolymeren, Polyester-Copolymeren oder Polyester-Homo- und -Copolymeren bestehen. Beispiele hierfür sind Abmischungen von Polyethylenterephthalat/Polybutylenterephthalat, Polyethylenterephthalat/Polyethylenisophthalat oder Polyethylenisophthalat/5-Natriumsulfoisophthalat. Entscheidend für die Auswahl der jeweiligen Polyestertypen ist die Löslichkeit der Katalysatorrückstände, weil sie die Oberflächenrauhigkeit der daraus hergestellten Folien beeinflussen kann.

Beispiele für Polymere, die in den Polyester zur Verbesserung der mechanischen Eigenschaften oder zur Erzeugung spezieller Oberflächenstrukturen eingearbeitet oder eingemischt werden können, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polylactone, Polycarbonate, Polytetrafluorethylen, Polysulfone u.a.

Bei den Harzen handelt es sich um natürliche oder synthetische niedermolekulare Harze mit einem Erweichungspunkt im Bereich von 60 bis 180°C, bestimmt nach DIN 1995-U 4. Von den zahlreichen niedermolekularen Harzen seien die Kohlenwasserstoffharze, insbesondere die Erdölharze (Petroleumharze), Styrolharze, Cyclopentadienharze und Terpenharze erwähnt. Eine Quelle derartiger Harze ist ein Nebenprodukt bei der Dampfcrackung von Kohlenwasserstoffen für die Herstellung von Ethylen und Propylen.

Wenigstens eine der Schichten, vorzugsweise die das Laufverhalten des aus der Folie hergestellten Bandes bestimmende Schicht, enthält fein dispers verteilte anorganische und/oder organische Pigmente in einer Größe und Menge, daß die Oberflächenstruktur dieser Seite sich nicht negativ auf die Oberflächenrauhigkeit der Gegenseite der Folie bzw. die Magnetschicht des Bandes auswirkt.

Beispiele für Pigmente sind $CaCO_3$, $BaSO_4$, $SiO_2$, natürliche und synthetische Silikate, natürliches oder pyrogenes Aluminiumoxid, $TiO_2$, $ZnO$, $MgO$ u.ä., Calciumphosphat, Salze der Terephthalsäure, Ruß sowie Teilchen aus polymeren Materialien wie z.B. Plastomeren, Elastomeren, Duromeren. Beispiele für organische Pigmentteilchen sind die in der DE-OS 33 13 923 beschriebenen Polymerteilchen. Die Pigmente können zwecks Verbesserung der Haftung zur Matrix mit einem Haftvermittler beschichtet sein oder - speziell bei organischen Teilchen - reaktive Gruppen aufweisen. Sie können sowohl über Dispersionen, eventuell unter Verwendung eines Dispergierhilfsmittels oder Koagulationsinhibitors, als auch über einen Masterbatch in den Polyester eingearbeitet werden.

Alternativ oder in Ergänzung zu den organischen und anorganischen Pigmenten können, wie bereits erwähnt, auch die während der Polyesterherstellung aus den Katalysatorrückständen mit Monomeren bzw. Polymeren der eingesetzten Säuren gezielt erzeugten Partikel, sogenannte Katalysatorpräzipitate, zur Einstellung der Oberflächenstruktur und damit des Gleitverhaltens der Folie herangezogen werden.

Die feinverteilten Pigmente oder Katalysatorrückstände haben eine mittlere Teilchengröße von 0,001 bis 5 μm, bevorzugt von kleiner/gleich 1 μm. Sie werden in Mengen von 0,001 bis 1 Gew.-%, vorzugsweise von 0,01 bis 0,5 Gew.-%, eingesetzt.

Wenigstens eine der Schichten kann zusätzlich zur Verbesserung der Gleiteigenschaften organische Additive in einer Menge von 0 bis 10 Gew.-%, bevorzugt in einer Menge von 0 bis 5 Gew.-%, enthalten. Beispiele hierfür sind eine oder mehrere folgender Substanzen: Glycerinmono-, -di- oder -triester, Fettsäuren, Derivate von Fettsäuren wie Ester oder Amide, gesättigte organische Säuren, ihre Salze, Polysiloxane, Polyether- oder Polyestersiloxane oder Wachse.

Die Folien der vorliegenden Erfindung können neben den bereits genannten Schlupf- und Gleitmitteln ferner noch wenigstens in einer Schicht ein Nukleierungsmittel sowie andere übliche Zusätze wie Antioxidantien, Thermostabilisatoren, Antistatika (z.B. Salze von Alkylsulfonsäuren oder sulfonierte Polyoxyalkylene) u.a. enthalten.

Additive, die sich sowohl auf die Dimensionsstabilität, die Abriebfestigkeit und die Streckbarkeit der Polyesterfolien aus den beschriebenen Rohstoffen positiv auswirken, sind Montanate, d.h. Montanesterwachssalze, Palmitate, Oleate, Stearate und andere.

Die Herstellung der im vorstehenden beschriebenen Trägerfolie erfolgt nach dem Extrusionsverfahren, bevorzugt nach dem Coextrusionsverfahren. Bei diesem Verfahren werden die die einzelnen Schichten der Trägerfolie bildenden Polymeren in getrennten Extrudern plastifiziert, über getrennte Schmelzeleitungen zusammengeführt und dann mittels einer Düse auf eine Kühlwalze extrudiert und zu einer unverstreckten Folie abgekühlt.

Die kennzeichnenden Merkmale dieses Verfahrens sind darin zu sehen, daß nach dem Abkühlen die coextrudierte Folie zweistufig, mehrstufig und/oder simultan bei Temperaturen zwischen dem Glaspunkt des Polymeren und 160°C mit Gesamtstreckverhältnissen im Bereich von 5,0 bis 14,0 streckorientiert wird und anschließend thermisch nachbehandelt, geschnitten und aufgewickelt wird.

Die thermische Nachbehandlung der mehrschichtigen Folie erfolgt in einem Temperaturbereich von $T_g$ + 70°C und dem Schmelzpunkt der Polymeren innerhalb eines Zeitintervalls von 0,5 bis 100 s.

Das Verfahren der Streckorientierung kann prinzipiell nach mehreren Verfahrensvarianten durchgeführt werden.

Zur Herstellung von besonders längsfesten Folien kann die amorphe Vorfolie zunächst mittels eines Streckrahmens bei Temperaturen im Bereich von 80 bis 150°C um das 2,5- bis 4,5fache in Querrichtung streckorientiert werden und daran anschließend mit Hilfe von mit unterschiedlichen Umlaufgeschwindigkeiten angetriebenen Walzen in Längsrichtung streckorientiert werden, wobei die Strecktemperaturen vorzugsweise um einen Faktor von 0,9 bis 0,99 niedriger und die Streckverhältnisse um den Faktor 1,1 bis 2,0 größer sind als bei der Orientierung in Querrichtung.

Nach einer anderen Verfahrensvariante kann die amorphe Vorfolie auch in einem mehrstufigen Prozeß streckorientiert werden. Dabei wird zuerst in einem ein- oder mehrstufigen Verfahren bei Temperaturen zwischen 100 und 150°C und einem Streckverhältnis im Bereich von 2 bis 6 in Längsrichtung streckorientiert und danach bei Temperaturen zwischen 80 und 130°C um das 2,5- bis 4,5fache in Querrichtung streckorientiert. Danach wird die Folie gegebenenfalls bei einer Temperatur im Bereich von 100 bis 130°C vorfixiert und anschließend mit einem Streckverhältnis von 1,5 bis 2,3 bei einer Temperatur zwischen 90 und 150°C nochmals in Längsrichtung streckorientiert.

Die ein- oder mehrstufig in Längsrichtung streckorientierte Folie kann auch alternativ zunächst in Querrichtung gestreckt und anschließend nochmals in Längs- und Querrichtung und/oder simultan nachgestreckt werden. Im Anschluß an die Streckprozesse wird die Folie auf jeden Fall bei einer Temperatur zwischen 180 und 230°C hitzefixiert.

Die Folien können zwei- oder mehrschichtig sein, sie können symmetrisch oder unsymmetrisch aufgebaut sein, wobei verschieden rezepturierte bzw. rezepturierte oder gar nicht rezepturierte Polymere oder Polymere gleicher chemischer Zusammensetzung, jedoch mit unterschiedlichem Molekulargewicht und verschiedener Viskosität durch Coextrusion vereinigt sein können.

Die erfindungsgemäße Folie ist in bevorzugter Ausführungsform so ausgebildet, daß sie aus einer Trägerschicht und einer darauf aufgebrachten Deckschicht besteht. Die freie Außenseite der Deckschicht ist dabei die für die Aufnahme der Informationsträgerschicht vorgesehene Oberfläche der Trägerfolie, die eine Rauhigkeit entsprechend einem $R_a$-Wert von kleiner/gleich 0,005 μm aufweist. Das Verhältnis der Schichtdicke der Trägerschicht zu der Schichtdicke der Deckschicht kann unterschiedlich sein. Wenn die Trägerschicht aus einem Polyester, Copolyester oder Polyestergemisch mit einem hohen Erweichungsbereich besteht, z.B. Polyethylenterephthalat oder Polyethylenterephthalat/-sulfoisophthalat, dann kann das Verhältnis der Dicke der Trägerschicht zu der Dicke der Deckschicht größer als 1, bevorzugt größer als 2, sein. Wenn die Trägerschicht aus einem Copolyester mit einem niedrigen Erweichungsbereich besteht, z.B. Polyethylenterephthalat/-isophthalat, dann ist das Verhältnis der Dicke der Trägerschicht zu der Dicke der Deckschicht kleiner als 1, bevorzugt kleiner als 0,5, besonders bevorzugt im Bereich von 0,5 bis 0,1.

Die Deckschicht ist bei der bevorzugten erfindungsgemäßen Ausführungsform mit Pigmenten versehen, während die Trägerschicht bevorzugt keine rauhigkeitsfördernden Teilchen enthält.

Im folgenden soll die Erfindung anhand von Ausführungsbeispielen näher erläutert werden.

Die in den Beispielen angegebenen Parameter sind insbesondere auf die folgende Art und Weise bestimmt worden:

1.) RSV-Wert:

Der Wert gibt die reduzierte spezifische Viskosität an, er wurde nach DIN 53 728, Blatt 2, gemessen.

2.) Abriebfestigkeit:

Sie wurde mit Hilfe eines selbst entwickelten Gerätes geprüft, bei dem ein 12,5 mm breites Folienband mit konstanter Geschwindigkeit und Bahnspannung zunächst über Reinigungswalzen, dann über eine Reibwalze und anschließend über zwei als Meßrollen dienende Gummiwalzen geführt wird. Die Beladung der Gummirollen diente als Maßstab für die Abriebfestigkeit der Folie. Als Vergleiche dienten Meßstandards von 1 (sehr abriebfest) bis 6 (sehr starker Abrieb).

3.) $F_5$-Longitudinalwert:

Der Wert gibt die Reißfestigkeit der Folie bei 5% Dehnung an. Die Messung erfolgt gemäß DIN 53 455.

4.) E-Modul:

Der Elastizitätsmodul wird nach DIN 53 457 gemessen.

$F_5$-Wert und E-Modul werden mit einem ZWICK-Gerät Typ 1445 bestimmt, wobei die Meßlänge 100 mm, die Streifenbreite 15 mm und die Abzugsgeschwindigkeit 10 mm/min (E-Modul) bzw. 100 mm/min beträgt. Die angegebenen Werte basieren auf fünf Einzelmessungen.

5.) Reibungskoeffizient:

Der Reibungskoeffizient gibt den Schlupf der Folie an. Er wird gemessen nach DIN 53 375

6.) $R_a$-Wert:

Der $R_a$-Wert drückt die Oberflächenrauhigkeit der Folie zahlenmäßig als arithmetischer Mittelwert aller Abstände des Rauhigkeitsprofils R von der Mittellinie aus. Die Messung erfolgt nach DIN 4768 mittels Oberflächenmeßgerät Perthometer SP 6 der Firma Feinprüf GmbH, Göttingen. Die angegebenen Werte basieren auf sechs Einzelmessungen, wobei der höchste Wert bei der Mittelwertbildung unberücksichtigt blieb. Der cut-off, d.h. die jeweilige Länge der gemessenen Einzelabschnitte, betrug jeweils 0,08 mm.

Beispiel 1

Polyethylenterephthalat mit einem RSV-Wert von 0,810, einer Restfeuchte von 0,005% sowie einem Zusatz von 0,05 Gew.-% an vernetzten Acrylatpartikeln mit einem mittleren Teilchendurchmesser von 0,65 $\mu$m bei extrem enger Korngrößenverteilung und 0,1 Gew.-% Natriummontanat und ein entsprechender pigmentfreier Polyester wurden separat aufgeschmolzen. Die Schmelzen wurden mit zwei Zahnradpumpen (Dosierpumpen) einer Düse zugeführt, zu einer zweischichtigen Vorfolie geformt und auf einer Kühlwalze mit einer Oberflächentemperatur von 30°C abgekühlt, wobei die für die spätere Aufnahme der Informationsträgerschicht vorgesehene Seite der zweischichtigen Folie mit der Kühlwalze in Kontakt kam.

Die ca. 240 $\mu$m starke Vorfolie wurde mit Walzen aufgeheizt, bei 117°C zunächst um das 3,0fache und anschliessend bei 80°C nochmals um das 1,1fache längsgestreckt, dann bei 110°C um das 4,3fache quergestreckt, bei 120°C vorfixiert und bei 140°C um den Faktor 2 nochmals längsgestreckt sowie bei 220°C thermofixiert.

Die Folie wies eine Gesamtdicke von 8,2 $\mu$m auf, wobei eine ca. 2 $\mu$m starke pigmentierte Schicht vorlag. Die Folie besaß die in der nachfolgenden Tabelle angegebenen Eigenschaften.

| | längs | quer |
|---|---|---|
| $F_5$-Wert, N/mm$^2$ | 174 | 105 |
| E-Modul, N/mm$^2$ | 7 300 | 4 700 |
| Schrumpf, % (105°C, 30 min) | 1,2 | 0,2 |
| Trübung, % | 3 | |
| Schlupf | innen/außen 30 | außen/außen 100 |
| Oberflächenrauhigkeit | pigmentierte Seite | nicht pigmentierte Seite |
| $R_a$-Wert, /um | 0,012 | 0,0012 |

Die Abriebfestigkeit der das Laufverhalten des Bandes bestimmenden rauhen Seite war sehr gut (Note 1).

Beispiel 2

Es wurde eine zweischichtige Folie aus einem Polyester analog Beispiel 1, der jedoch 0,3 Gew.-% $BaSO_4$ mit einer mittleren Korngröße von 0,6 $\mu$m und 0,05 Gew.-% Natriummontanat, bezogen auf das Gewicht des Polyesters, enthielt, sowie einem entsprechenden Polyester ohne Additive hergestellt.

Die amorphe Vorfolie wurde mit Hilfe von Walzen aufgeheizt und einem zweistufigen Streckprozeß in Längsrichtung unterworfen, wobei durch Streckung um das 1,2fache bei 120°C zunächst ein überstreckter Film hergestellt wurde, der nicht nennenswert orientiert war. Dieser überstreckte Film wurde um den Faktor 3,3 bei 115°C in Längsrichtung und anschließend bei 110°C um den Faktor 3,3 in Querrichtung streckorientiert. Nach einer Vorfixierung bei 120°C wurde der Film mit Hilfe von Walzen streckorientiert, nochmals in Längsrichtung bei Temperaturen um 150°C um den Faktor 1,8 nachlängsgestreckt und anschliessend bei 220°C thermofixiert.

Der 8,5 $\mu$m starke Film mit einer ca. 1,5 $\mu$m starken pigmentierten Schicht hatte die in der nachfolgenden Ta-

belle angegebenen Eigenschaften:

|  | längs | quer |
|---|---|---|
| $F_5$-Wert, $N/mm^2$ | 182 | 100 |
| E-Modul, $N/mm^2$ | 7 600 | 4 100 |
| Schrumpf, % (105°C, 30 min) | 1,55 | 0,15 |
| Trübung, % | 10 | |
| Schlupf | innen/außen 32 | außen/außen 95 |
| Oberflächenrauhigkeit | pigmentierte Seite | nicht pigmentierte Seite |
| $R_a$-Wert, /um | 0,015 | 0,004 |

Die Abriebfestigkeit der pigmentierten Seite war sehr gut (Note 1).

Beispiel 3

Aus einem Polyester entsprechend Beispiel 1, jedoch mit dem Unterschied, daß er 0,1 Gew.-% $BaSO_4$ mit einer mittleren Korngröße von 0,65 μm sowie 0,1 Gew.-% eines Calciumsalzes eines mit Butandiol teilverseiften Montanwachses enthielt, und einem Copolyester aus Terephthalsäure und 3,4 Mol-% eines Na-Salzes der 5-Sulfoisophthalsäure wurde eine 7,2 μm starke Folie hergestellt.

Die ca. 95 μm starke amorphe Vorfolie wurde zunächst bei einer Temperatur von 96°C in einem Streckrahmen um das 3,4fache quer und anschließend um das 3,85fache bei einer Temperatur von 85°C längsgestreckt, danach bei 195°C hitzefixiert. Die Folie hatte folgende Eigenschaften:

|  | längs | quer |
|---|---|---|
| $F_5$-Wert, $N/mm^2$ | 160 | 105 |
| E-Modul, $N/mm^2$ | 6 600 | 4 100 |
| Schlupf | innen/innen 30 | außen/außen 90 |
| Oberflächenrauhigkeit | pigmentierte Seite | nicht pigmentierte Seite |
| $R_a$-Wert, /um | 0,017 | 0,004 |

Die Abriebfestigkeit der das Laufverhalten des Bandes bestimmenden Seite war gut (Note 2).

**Patentansprüche**

1. Coextrudierte, biaxial orientierte, mehrschichtige Polyesterfolie als Trägerfolie für magnetische Informationsträger, dadurch gekennzeichnet, daß die Gesamtdicke der mehrschichtigen Folie höchstens 10 μm beträgt, die Oberflächenrauhigkeit der Trägerfolie auf der für die Aufnahme der Informationsträgerschicht vorgesehenen Seite einen $R_a$-Wert (DIN 4768) von gleich/kleiner als 0,010 μm und die Oberflächenrauhigkeit der Gegenseite, die nicht für die Aufnahme der Informationsträgerschicht vorgesehenen Seite der Trägerfolie, einen $R_a$-Wert von größer als 0,010 μm aufweist und daß die Folie einen E-Modul in MD von größer/gleich 6500 N/mm² hat und daß wenigstens eine der Schichten fein dispers verteilte anorganische und/oder organische Pigmente enthält, wobei die Polyesterfolie in einem Temperaturbereich von $T_g$+70 °C und dem Schmelzpunkt der Polymeren innerhalb eines Zeitintervalls von 0,5 bis 100 s thermisch nachbehandelt ist.

2. Folie nach Anspruch 1, dadurch gekennzeichnet, daß die Oberflächenrauhigkeit der Folie auf der für die Aufnahme der Informationsträgerschicht vorgesehenen Seite einen $R_a$-Wert von kleiner/gleich 0,005 µm aufweist.

3. Folie nach Anspruch 1 oder 2, dadurch gekennzeichnet, daß sie aus einer Trägerschicht und einer Deckschicht besteht.

4. Folie nach einem der Ansprüche 1 bis 3, dadurch gekennzeichnet, daß der Polyester sowohl Homo- und Copolyester als auch Gemische verschiedener Polyester sowie Abmischungen oder Blends von Polyestern mit anderen Polymeren und gegebenenfalls Harzen umfassen kann.

5. Folie nach einem der Ansprüche 1 bis 4, dadurch gekennzeichnet, daß die Pigmente eine mittlere Teilchengröße im Bereich von 0,001 bis 5 µm besitzen.

6. Folie nach einem der Ansprüche 1 bis 5, dadurch gekennzeichnet, daß die Pigmente in einer Menge von 0,001 bis 1,0 Gew.-% vorhanden sind, bezogen auf das Gesamtgewicht der pigmentierten Schicht.

7. Verfahren zur Herstellung einer Folie nach einem der Ansprüche 1 bis 6, bei dem nach dem Abkühlen die coextrudierte Folie zweistufig, mehrstufig und/-oder simultan bei Temperaturen zwischen dem Glaspunkt des Polymeren und 160 °C mit Gesamtstreckverhältnissen im Bereich von 5,0 bis 14,0 streckorientiert wird und anschließend in einem Temperaturbereich von $T_g$ + 70 °C und dem Schmelzpunkt des Polymeren innerhalb eines Zeitintervalls von 0,5 bis 100 s thermisch nachbehandelt, geschnitten und aufgewickelt wird.

## Claims

1. A coextruded, biaxially oriented, multilayer polyester film as support film for magnetic information carriers, wherein the overall thickness of the multilayer film is not more than 10 µm, the surface roughness of the support film on the side intended to receive the information-carrying coating has an $R_a$ value (DIN 4768) of less than or equal to 0.010 µm and the surface roughness of the opposite side, the side of the support film not intended to receive the information-carrying coating, has an $R_a$ value greater than 0.010 µm, and wherein the film has a modulus of elasticity in the MD of greater than or equal to 6500 N/mm², and wherein at least one of the layers comprises finely dispersed inorganic and/or organic pigments, the polyester film being aftertreated in a temperature range from $T_g$+70°C and the melting point of the polymer and within a time interval of 0.5 to 100 s.

2. A film as claimed in claim 1, wherein the surface roughness of the film on the side intended to receive the information-carrying layer has an $R_a$ value of less than or equal to 0.005 µm.

3. A film as claimed in claim 1 or claim 2, which comprises a base layer and a top layer.

4. A film as claimed in any one of claims 1 to 3, wherein the polyester may comprise a homopolyester or copolyester or else a mixture of different polyesters or a mixture or blend of polyesters with other polymers, and, if desired, resins.

5. A film as claimed in any one of claims 1 to 4, wherein the pigments have an average particle size in the range from 0.001 to 5 µm.

6. A film as claimed in any one of claims 1 to 5, wherein the pigments are present in an amount from 0.001 to 1.0% by weight, based on the overall weight of the pigmented layer.

7. A process for the manufacture of a film as claimed in any one of claims 1 to 6, which comprises, after cooling, stretch-orienting the coextruded film in a two-stage, multi-stage and/or simultaneous process at temperatures between the glass transition temperature of the polymer and 160°C, with overall stretching ratios in the range from 5.0 to 14.0, and subsequently thermally aftertreating the film in a temperature range from $T_g$+70°C and the melting point of the polymer and within a time interval of 0.5 to 100 s, cutting and winding the film.

**Revendications**

1. Film multicouche en polyester, coextrudé et orienté biaxialement, comme film support pour support d'information magnétique, caractérisé en ce que l'épaisseur totale du film multicouche vaut au plus 10 $\mu$m, la rugosité superficielle du film support sur la face prévue pour la réception de la couche support d'information a une valeur $R_a$ (DIN 4768) égale ou inférieure à 0,010 $\mu$m et la rugosité superficielle de la face opposée, face qui n'est pas celle prévue pour la réception de la couche support d'information, a une valeur $R_a$ supérieure à 0,010 $\mu$m, que le module d'élasticité du film suivant le sens de la machine est égal ou supérieur à 6500 N/mm$^2$ et qu'au moins une des couches contient des pigments minéraux et/ou organiques finement divisés en dispersion, le film en polyester étant soumis à un posttraitement thermique de 0,5 à 100 secondes dans un intervalle de températures allant de ($T_g$ + 70°C) jusqu'au point de fusion des polymères.

2. Film selon la revendication 1, caractérisé en ce que la rugosité superficielle du film sur la face prévue pour la réception de la couche support d'information présente une valeur $R_a$ inférieure ou égale à 0,005 $\mu$m.

3. Film selon la revendication 1 ou 2, caractérisé en ce qu'il est constitué d'une couche support et d'une couche de surface.

4. Film selon une quelconque des revendications 1 à 3, caractérisé en ce que le polyester peut englober aussi bien des homo- et copolyesters que des compositions de divers polyesters ainsi que des mélanges ou mélanges mécaniques de polyesters avec d'autres polymères et éventuellement des résines.

5. Film selon une quelconque des revendications 1 à 4, caractérisé en ce que les pigments présentent une taille moyenne de particules de 0,001 à 5 $\mu$m.

6. Film selon une quelconque des revendications 1 à 5, caractérisé en ce que les pigments sont présents à raison de 0,001 à 1,0 % en poids par rapport au poids total de la couche pigmentée.

7. Procédé de fabrication d'un film selon une quelconque des revendications 1 à 6, dans lequel, après refroidissement, on oriente le film coextrudé par étirage en deux étapes ou plus, et/ou simultanément, à des températures comprises entre le point de transition vitreuse du polymère et 160°C et avec des rapports d'étirage total de l'ordre de 5,0 à 14,0, puis on le soumet à un posttraitement thermique de 0,5 à 100 secondes dans un intervalle de températures allant de ($T_g$ + 70°C) jusqu'au point de fusion du polymère, on le découpe et on l'enroule.